# EUROPÄISCHE PATENTANMELDUNG

(11) **EP 3 056 464 A1**
(43) Veröffentlichungstag der Anmeldung: **17.08.2016**
(21) Anmeldenummer: 15154677.7
(22) Anmeldetag: 11.02.2015
(51) Int. Cl.: B66C 13/08, B66C 13/48, B66C 19/00, B65G 63/00

(54) **Automatisierte Kransteuerung mit Berücksichtigung von last- und positionsabhängigen Messfehlern**

(71) Anmelder: Siemens Aktiengesellschaft, 80333 München (DE)
(72) Erfinder: Fakkeldij, Robert, 90542 Eckental (DE); Ladra, Uwe, 91056 Erlangen (DE); Recktenwald, Alois, 91074 Herzogenaurach (DE)

(57) **Zusammenfassung**

Ein Umschlagsystem umfasst eine auf einem Untergrund (3) angeordnete Containerbrücke (1) und mindestens eine auf dem Untergrund (3) angeordnete Lastumschlagstelle (10, 11). Die Containerbrücke (1) weist eine auf einer Traverse (5) der Containerbrücke (1) relativ zum Untergrund (3) verfahrbare Laufkatze (6) auf. Eine Kransteuerung (12) stimmt einen auf die Traverse (5) bezogenen Zielort (xK) der Laufkatze (6) und einen auf den Untergrund (3) bezogenen Zielort (xL) der Lastumschlagstelle (10, 11) derart aufeinander ab, dass beim Absenken der Ziellast (8) am Zielort (xK) der Laufkatze (6) die Ziellast (8) auf den Zielort (xL) der Lastumschlagstelle (10, 11) abgesenkt wird. Die Abstimmung erfolgt unter zusätzlicher Berücksichtigung zumindest einer Zielbelastung (L), mit der die Laufkatze (6) an ihrem Zielort (xK) belastet ist. Die Kransteuerung (12) positioniert die Laufkatze (6) an ihrem Zielort (xL). Weiterhin senkt sie nach dem Positionieren der Laufkatze (6) die Ziellast (8) auf die Lastumschlagstelle (10, 11) ab. Falls die Lastumschlagstelle (11) auf dem Untergrund (3) verfahrbar ist und die Lastumschlagstelle (11) von der Kransteuerung (12) gesteuert wird, positioniert die Kransteuerung (12) weiterhin vor dem Absenken der Ziellast (8) auf die Lastumschlagstelle (11) die Lastumschlagstelle (11) an ihrem Zielort (xL).

## Beschreibung

Die vorliegende Erfindung geht aus von einem Steuerverfahren für ein Umschlagsystem, das eine auf einem Untergrund angeordnete Containerbrücke mit einer auf einer Traverse der Containerbrücke relativ zum Untergrund verfahrbaren Laufkatze und mindestens eine auf dem Untergrund angeordnete Lastumschlagstelle umfasst,
- wobei eine Kransteuerung einen auf die Traverse bezogenen Zielort der Laufkatze und einen auf den Untergrund bezogenen Zielort der Lastumschlagstelle derart aufeinander abstimmt, dass beim Absenken der Ziellast am Zielort der Laufkatze die Ziellast auf den Zielort der Lastumschlagstelle abgesenkt wird,
- wobei die Kransteuerung die Laufkatze an ihrem Zielort positioniert,
- wobei die Kransteuerung nach dem Positionieren der Laufkatze die Ziellast auf die Lastumschlagstelle absenkt und
- wobei, falls die Lastumschlagstelle auf dem Untergrund verfahrbar ist und die Lastumschlagstelle von der Kransteuerung gesteuert wird, die Kransteuerung vor dem Absenken der Ziellast auf die Lastumschlagstelle die Lastumschlagstelle an ihrem Zielort positioniert.

Die vorliegende Erfindung geht weiterhin aus von einem Computerprogramm, das Maschinencode umfasst, der von einer Kransteuerung abarbeitbar ist, wobei die Abarbeitung des Maschinencodes durch die Kransteuerung bewirkt, dass die Kransteuerung ein derartiges Steuerverfahren ausführt.

Die vorliegende Erfindung geht weiterhin aus von einem Umschlagsystem,
- wobei das Umschlagsystem eine auf einem Untergrund angeordnete Containerbrücke mit einer Traverse umfasst,
- wobei die Containerbrücke eine auf der Traverse relativ zum Untergrund verfahrbare Laufkatze aufweist,
- wobei das Umschlagsystem mindestens eine auf dem Untergrund angeordnete Lastumschlagstelle umfasst,
- wobei das Umschlagsystem eine Kransteuerung umfasst.

Containerbrücken werden mehr und mehr automatisiert betrieben. Beim automatisierten Betrieb von Containerbrücken ist es insbesondere erforderlich, den Zielort der Laufkatze und den Zielort der Lastumschlagstelle exakt aufeinander abzustimmen. Denn nur dann ist ein ordnungsgemäßes Absenken der Last gewährleistet.

Beim Betrieb der Containerbrücke werden zum einen unterschiedlich schwere Lasten verfahren. Minimal ist dies der Spreader, maximal ist dies der Spreader zuzüglich ein Container mit maximal zulässigem Gewicht. Zum anderen kommt es aufgrund der entsprechenden Positionierung der Laufkatze zu unterschiedlichen Masseverteilungen an der Containerbrücke. Eine Verformung der Kranstruktur stellt sich in Abhängigkeit von zumindest diesen beiden Ursachen ein. Die sich dadurch ergebenden Abweichungen sind aufgrund der erheblichen Größe der Containerbrücke oftmals nicht mehr vernachlässigbar. Sie bewegen sich vielfach im Zentimeter-Bereich. Fehlpositionierungen in dieser Größenordnung verhindern oftmals eine erfolgreiche Automatisierung des Betriebs der Containerbrücke.

Zur Kompensation von Fehlpositionierungen werden vielfach Messsysteme eingesetzt. Die Messsysteme können jedoch lediglich für einen einzigen, statischen Zustand der Containerbrücke ausgelegt werden. Sie können nicht in Abhängigkeit von der Positionierung der Laufkatze auf der Traverse und der auf die Laufkatze wirkenden Last nachgeführt werden. Durch die Verwendung der Messsysteme des Standes der Technik wird das Problem daher nicht gelöst.

Die Aufgabe der vorliegenden Erfindung besteht darin, Möglichkeiten zu schaffen, mittels derer für jede mittels der Laufkatze bewegte Last eine hochgenaue Abstimmung der Zielposition der Laufkatze und der Zielposition der Umschlagstelle aufeinander realisiert werden kann.

Die Aufgabe wird durch ein Steuerverfahren mit den Merkmalen des Anspruchs 1 gelöst. Vorteilhafte Ausgestaltungen des Steuerverfahrens sind Gegenstand der abhängigen Ansprüche 2 bis 11.

Erfindungsgemäß wird ein Steuerverfahren für ein Umschlagsystem der eingangs genannten Art dadurch ausgestaltet,
- dass die Kransteuerung im Rahmen der Abstimmung des Zielortes der Laufkatze und des Zielortes der Lastumschlagstelle zumindest eine Zielbelastung, mit der die Laufkatze an ihrem Zielort belastet ist, mit berücksichtigt.

Erfindungsgemäß wird also, basierend auf dem Zielort der Laufkatze und der Ziellast, ein Positionierungsfehler der Laufkatze ermittelt, der sich gegenüber einer absolut starren Containerbrücke einstellt. Dieser Positionierungsfehler wird sodann bei der Abstimmung des Zielortes der Laufkatze und des Zielortes der Umschlagstelle korrigierend berücksichtigt. Hierbei kann nach Bedarf und Möglichkeit der Zielort der Umschlagstelle korrigiert werden oder der Zielort der Laufkatze korrigiert werden. Falls der Zielort der Laufkatze korrigiert wird, ist in der Regel eine einmalige Korrektur ausreichend. Gegebenenfalls kann jedoch alternativ, ausgehend von dem korrigierten Zielort der Laufkatze, erneut korrigiert werden, bis sich eine hinreichende Konvergenz ergeben hat.

Es ist möglich, dass der Kransteuerung im Rahmen der Abstimmung des Zielortes der Laufkatze und des Zielortes der Lastumschlagstelle aufeinander zunächst der Zielort der Lastumschlagstelle bekannt ist. In diesem Fall ermittelt die Kransteuerung den Zielort der Laufkatze unter Berücksichtigung zumindest des Zielortes der Lastumschlagstelle und der Zielbelastung.

Es ist möglich, dass der Zielort der Lastumschlagstelle fehlerfrei bekannt ist. Beispielsweise können Lagerplätze, auf denen Container abgestellt werden sollen bzw. von denen Container aufgenommen werden sollen, fest vorgegeben sein. In anderen Fällen ist der Zielort der Lastumschlagstelle eine variable Größe. Beispielsweise kann die Lastumschlagstelle auf einem AGV (automated guided vehicle) angeordnet sein. In diesem Fall ist nicht ohne weiteres gewährleistet, dass das AGV exakt an einem vorbestimmten Zielort positioniert ist. Um dennoch eine korrekte Ermittlung des Zielortes der Laufkatze zu erreichen, ist es möglich,
- dass zu einem ersten Erfassungszeitpunkt mittels an der Containerbrücke angeordneter Sensoren Messwerte für den Zielort der Lastumschlagstelle erfasst werden,
- dass die Kransteuerung den Zielort der Lastumschlagstelle anhand der Messwerte für den Zielort der Lastumschlagstelle unter Berücksichtigung zumindest eines ersten Erfassungsortes und einer ersten Erfassungsbelastung ermittelt,
- dass der erste Erfassungsort derjenige Ort ist, an dem die Laufkatze sich zum ersten Erfassungszeitpunkt auf der Traverse befindet, und
- dass die erste Erfassungsbelastung diejenige Belastung ist, mit der die Laufkatze zum ersten Erfassungszeitpunkt belastet ist.

Durch diese Vorgehensweise können beispielsweise Messfehler der Sensoren berücksichtigt werden, die sich aufgrund von Verformungen der Containerbrücke zum ersten Erfassungszeitpunkt ergeben, wobei diese Verformungen wiederum von dem ersten Erfassungsort und der ersten Erfassungsbelastung abhängen.

In vielen Fällen wird die erste Erfassungsbelastung mit der Zielbelastung identisch sein. Zwingend ist dies jedoch nicht erforderlich. Ein Beispiel: Ein Container soll an einer Lagerstelle aufgenommen werden, sodann durch entsprechendes Verfahren der Laufkatze über einem AGV positioniert werden und sodann auf dem AGV abgesetzt werden. Während des Absetzens/Absenkens des Containers wirkt die Masse des Spreaders in Verbindung mit der Masse des Containers als Zielbelastung. Wenn die Laufkatze zum ersten Erfassungszeitpunkt den Container bereits aufgenommen hat, ist die erste Erfassungsbelastung mit der Zielbelastung identisch. Es ist jedoch möglich, dass das AGV mittels der Sensoren bereits erfasst wird, während mittels der Laufkatze ein anderer Container umgeschlagen wird oder die Laufkatze eine Leerfahrt ausführt. In diesem Fall ist die erste Erfassungsbelastung von der Zielbelastung verschieden.

Der erste Erfassungsort kann ebenfalls mit dem Zielort der Laufkatze identisch sein. Falls dies der Fall ist, ist diese Übereinstimmung jedoch rein zufällig, da der Zielort der Laufkatze erst nach der Ermittlung des Zielortes der Lastumschlagstelle ermittelt wird.

Es ist möglich, dass die Kransteuerung die Verformung der Containerbrücke ausschließlich anhand des ersten Erfassungsortes und der ersten Erfassungsbelastung ermittelt und dementsprechend auch die daraus resultierenden Korrekturen der von den Sensoren gelieferten Messwerte ausschließlich anhand des ersten Erfassungsortes und der ersten Erfassungsbelastung ermittelt. Vorzugsweise berücksichtigt die Kransteuerung jedoch im Rahmen der Ermittlung des Zielorts der Lastumschlagstelle - stets bezogen auf den ersten Erfassungszeitpunkt - mindestens eine zeitliche Ableitung des ersten Erfassungsortes, einen Abstand einer ersten Erfassungslast von der Laufkatze, mindestens eine zeitliche Ableitung des Abstands der ersten Erfassungslast von der Laufkatze und/oder einen Pendelzustand der ersten Erfassungslast relativ zur Laufkatze. Bei den zeitlichen Ableitungen kann es sich insbesondere um die zweiten zeitlichen Ableitungen (= Beschleunigungen) handeln. Der Pendelzustand kann insbesondere dessen Richtung, dessen Amplitude, dessen Phasenlage und die Pendelfrequenz bzw. die die Pendelfrequenz bestimmende wirksame Seillänge umfassen.

Falls die Lastumschlagstelle aufgrund einer entsprechenden Ansteuerung durch die Kransteuerung auf dem Untergrund verfahrbar ist, ist es alternativ möglich, dass der Kransteuerung im Rahmen der Abstimmung des Zielortes der Laufkatze und des Zielortes der Lastumschlagstelle aufeinander zunächst der Zielort der Laufkatze bekannt ist. In diesem Fall ermittelt die Kransteuerung den Zielort der Lastumschlagstelle unter Berücksichtigung zumindest des Zielortes der Laufkatze und der Zielbelastung.

Falls die Lastumschlagstelle aufgrund einer entsprechenden Ansteuerung durch die Kransteuerung auf dem Untergrund verfahrbar ist, ist es möglich, dass die Lastumschlagstelle von der Kransteuerung rein gesteuert positioniert wird. Vorzugsweise ist das Steuerverfahren jedoch derart ausgestaltet,
- dass zu einem zweiten Erfassungszeitpunkt mittels an der Containerbrücke angeordneter Sensoren Messwerte für einen Istort der Lastumschlagstelle erfasst werden,
- dass die Kransteuerung den Istort der Lastumschlagstelle anhand der Messwerte für den Istort der Lastumschlagstelle unter Berücksichtigung zumindest eines zweiten Erfassungsortes und einer zweiten Erfassungsbelastung ermittelt,
- dass der zweite Erfassungsort derjenige Ort ist, an dem die Laufkatze sich zum zweiten Erfassungszeitpunkt auf der Traverse befindet,
- dass die zweite Erfassungsbelastung diejenige Belastung ist, mit der die Laufkatze zum zweiten Erfassungszeitpunkt belastet ist, und
- dass die Kransteuerung in Abhängigkeit von der Abweichung des ermittelten Istortes der Lastumschlagstelle vom Zielort der Lastumschlagstelle Steuerbefehle für das Positionieren der Lastumschlagstelle ermittelt.

Durch diese Vorgehensweise können - analog zu Messfehlern der Sensoren zum ersten Erfassungszeitpunkt - beispielsweise Messfehler der Sensoren berücksichtigt werden, die sich aufgrund von Verformungen der Containerbrücke zum zweiten Erfassungszeitpunkt ergeben, wobei diese Verformungen wiederum von dem zweiten Erfassungsort und der zweiten Erfassungsbelastung abhängen. Die obigen Ausführungen zu den Messfehlern zum ersten Erfassungszeitpunkt sind in analoger Weise anwendbar. Diese Ausgestaltung ist unabhängig davon realisierbar, welcher Zielort (der der Laufkatze oder der der Lastumschlagstelle) der Kransteuerung zuerst bekannt ist. Auch ist diese Ausgestaltung unabhängig davon realisierbar, ob zusätzlich zur Lastumschlagstelle auch die Laufkatze verfahren wird oder nicht

Im Rahmen der Ermittlung des Istortes der Lastumschlagstelle ist es möglich, dass die Kransteuerung - stets bezogen auf den zweiten Erfassungszeitpunkt - mindestens eine zeitliche Ableitung des zweiten Erfassungsortes, einen Abstand einer zweiten Erfassungslast von der Laufkatze, mindestens eine zeitliche Ableitung des Abstands der zweiten Erfassungslast von der Laufkatze und/oder einen Pendelzustand der zweiten Erfassungslast relativ zur Laufkatze berücksichtigt. Auch diese Vorgehensweise ist analog zu der Vorgehensweise zum ersten Erfassungszeitpunkt.

Es ist möglich, die erfindungsgemäße Berücksichtigung von Lasten und dem Wirkort der Lasten (= jeweilige Positionierung der Laufkatze) ausschließlich zur Korrektur von Orten in einer im wesentlichen horizontalen Ebene (d.h. dem Untergrund oder der Traverse) vorzunehmen. Es ist jedoch möglich,
- dass die Kransteuerung eine Zielhöhe der Ziellast unter Berücksichtigung zumindest des Zielortes der Laufkatze und der Zielbelastung korrigiert und
- dass die Kransteuerung die Ziellast auf die von ihr korrigierte Zielhöhe absenkt.

Im Rahmen dieser Vorgehensweise wird also das Ausmaß berücksichtigt, in dem die Höhe der Traverse über dem Untergrund sich am Zielort der Laufkatze durch die Zielbelastung ändert. In vielen Fällen wird die Zielhöhe der Ziellast konstant sein. In manchen Fällen kann sie jedoch variieren. In derartigen Fällen ist es möglich,
- dass zu einem dritten Erfassungszeitpunkt mittels an der Containerbrücke angeordneter Sensoren Messwerte für die Zielhöhe erfasst werden,
- dass die Kransteuerung die Zielhöhe anhand der Messwerte für die Zielhöhe unter Berücksichtigung zumindest eines dritten Erfassungsortes und einer dritten Erfassungsbelastung ermittelt,
- dass der dritte Erfassungsort derjenige Ort ist, an dem die Laufkatze sich zum dritten Erfassungszeitpunkt auf der Traverse befindet, und
- dass die dritte Erfassungsbelastung diejenige Belastung ist, mit der die Laufkatze zum dritten Erfassungszeitpunkt belastet ist.

Durch diese Vorgehensweise können - wie zuvor beim ersten und beim zweiten Erfassungszeitpunkt - Messfehler der Sensoren berücksichtigt werden, die sich aufgrund von Verformungen der Containerbrücke zum dritten Erfassungszeitpunkt ergeben, wobei diese Verformungen wiederum von dem dritten Erfassungsort und der dritten Erfassungsbelastung abhängen. Die obigen Ausführungen zu den Messfehlern zum ersten Erfassungszeitpunkt sind in analoger Weise anwendbar.

Im Rahmen der Ermittlung der Zielhöhe ist es möglich, dass die Kransteuerung - stets bezogen auf den dritten Erfassungszeitpunkt - mindestens eine zeitliche Ableitung des dritten Erfassungsortes, einen Abstand einer dritten Erfassungslast von der Laufkatze, mindestens eine zeitliche Ableitung des Abstands der dritten Erfassungslast von der Laufkatze und/ oder einen Pendelzustand der dritten Erfassungslast relativ zur Laufkatze berücksichtigt. Auch diese Vorgehensweise ist analog zu der Vorgehensweise zum ersten Erfassungszeitpunkt.

Die Art und Weise, auf welche die Kransteuerung die erforderlichen Korrekturen ermittelt, kann auf verschiedene Weise implementiert sein. Beispielsweise ist es möglich, dass die Kransteuerung im Rahmen der Abstimmung des Zielortes der Laufkatze und des Zielortes der Lastumschlagstelle aufeinander ein zumindest von der jeweiligen Belastung der Laufkatze und dem jeweiligen Ort der Laufkatze auf der Traverse abhängiges Modell der Containerbrücke implementiert, wobei das Modell eine Korrekturtabelle, ein Stabtragwerkmodell der Containerbrücke und/oder ein auf finiten Elementen basierendes Modell der Containerbrücke umfasst.

Die Aufgabe wird weiterhin durch ein Computerprogramm mit den Merkmalen des Anspruchs 12 gelöst. Eine vorteilhafte Ausgestaltung des Computerprogramms ist Gegenstand des abhängigen Anspruchs 13.

Erfindungsgemäß bewirkt die Abarbeitung des Maschinencodes durch die Kransteuerung, dass die Kransteuerung ein erfindungsgemäßes Steuerverfahren ausführt. Das Computerprogramm kann insbesondere in einem Speicher in maschinenlesbarer Form hinterlegt sein.

Die Aufgabe wird weiterhin durch eine Kransteuerung mit den Merkmalen des Anspruchs 14 gelöst. Erfindungsgemäß ist die Kransteuerung mit einem erfindungsgemäßen Computerprogramm programmiert.

Die Aufgabe wird weiterhin durch ein Umschlagsystem mit den Merkmalen des Anspruchs 15 gelöst. Erfindungsgemäß ist die Kransteuerung erfindungsgemäß ausgebildet.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung:
- FIG 1: ein Umschlagsystem,
- FIG 2: ein Ablaufdiagramm,
- FIG 3: eine Containerbrücke,
- FIG 4: eine Containerbrücke,
- FIG 5: ein Ablaufdiagramm,
- FIG 6: ein Ablaufdiagramm,
- FIG 7: ein Ablaufdiagramm,
- FIG 8: ein Ablaufdiagramm,
- FIG 9: ein Ablaufdiagramm und
- FIG 10: ein Modell einer Containerbrücke.

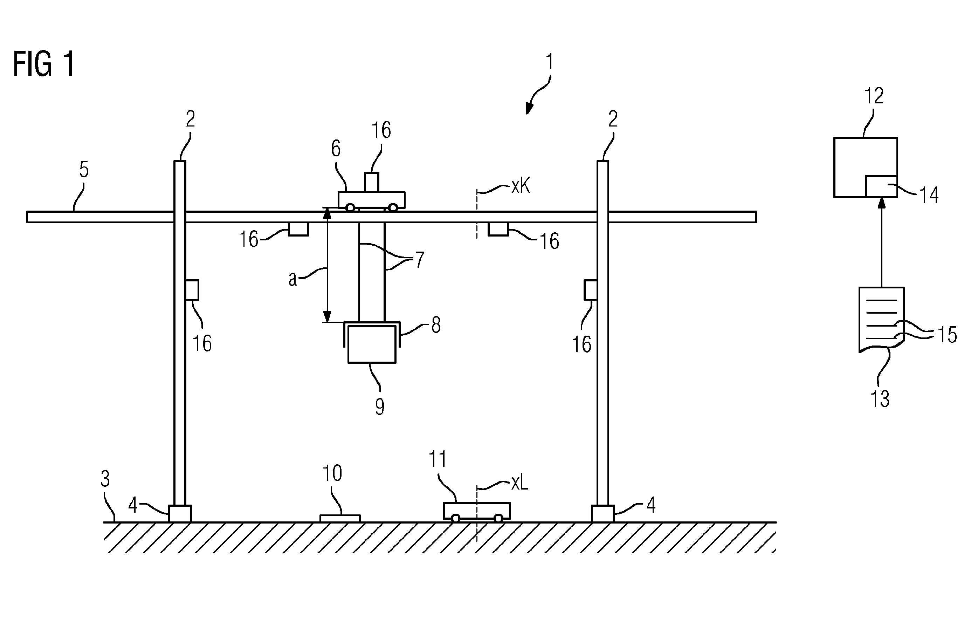

Gemäß FIG 1 weist ein Umschlagsystem eine Containerbrücke 1 auf. Die Containerbrücke 1 weist eine Mehrzahl von Stützpfeilern 2 auf, mittels derer die Containerbrücke 1 auf einem Untergrund 3 angeordnet ist. Der Untergrund 3 ist im wesentlichen horizontal. In der Regel sind die Stützpfeiler 2 auf Schienen 4 verfahrbar. Die Verfahrrichtung ist orthogonal zur Darstellung in FIG 1, also in die Bildebene hinein bzw. aus ihr heraus. Die Stützpfeiler 2 tragen eine Traverse 5. Die Traverse 5 verläuft parallel zum Untergrund 3 und damit ebenfalls horizontal.

Die Containerbrücke 1 weist weiterhin eine Laufkatze 6 auf. Die Laufkatze 6 ist auf der Traverse 5 relativ zum Untergrund verfahrbar. Die Verfahrrichtung der Laufkatze 6 ist horizontal und orthogonal zur Verfahrrichtung der Stützpfeiler 2.

Die Laufkatze 6 ist über ein Seilsystem 7 mit einem Spreader 8 verbunden. Durch Verlängern bzw. Verkürzen des Seilsystems 7 kann der Spreader 8 abgesenkt bzw. angehoben werden. Zusammen mit dem Spreader 8 wird gegebenenfalls auch ein Container 9, der vom Spreader 8 gegriffen ist, mit abgesenkt bzw. angehoben. Zu jedem Zeitpunkt korrespondiert eine jeweils aktuelle Last der Laufkatze 6 mit der Masse des Spreaders 8 zuzüglich der Masse des vom Spreader 8 gegriffenen Containers 9.

Nachfolgend wird zwischen der Last der Laufkatze 6 und deren Belastung unterschieden. Die Last ist der von der Laufkatze 6 verfahrene Gegenstand als solcher, also der Spreader 8 mit oder ohne Container 9. Die Belastung der Laufkatze 6 ist die durch die Last auf die Laufkatze 6 ausgeübte Gewichtskraft. Wenn beispielsweise von der Laufkatze 6 der leere Spreader 8 verfahren wird und die Masse des Spreaders 8 5 Tonnen beträgt, so ist die Last der Spreader 8 und die Belastung 5 Tonnen. Die Unterscheidung zwischen Last und Belastung wird nachfolgend auch in Verbindung mit Komposita beibehalten, beispielsweise für eine Ziellast und eine Zielbelastung oder für eine Erfassungslast und eine Erfassungsbelastung.

Das Umschlagsystem weist mindestens eine Lastumschlagstelle 10, 11 auf. Es kann sich bei der Lastumschlagstelle 10, 11 beispielsweise um eine ortsfeste Lastumschlagstelle 10 handeln, d.h. eine Lastumschlagstelle, die auf dem Untergrund 3 nicht verfahrbar ist. Ein typisches Beispiel einer derartigen Lastumschlagstelle 10 ist ein Lagerplatz für einen Container 9. Alternativ kann es sich bei der Lastumschlagstelle 10, 11 um eine mobile Lastumschlagstelle 11 handeln, d.h. eine Lastumschlagstelle, die auf dem Untergrund 3 verfahrbar ist. Ein typisches Beispiel einer derartigen Lastumschlagstelle 11 ist ein AGV (automated guided vehicle).

Das Umschlagsystem weist weiterhin eine Kransteuerung 12 auf. Von der Kransteuerung 12 wird das Umschlagsystem gesteuert. Die Kransteuerung 12 ist mit einem Computerprogramm 13 programmiert. Das Computerprogramm 13 ist insbesondere in einem Speicher 14 der Kransteuerung 12 in maschinenlesbarer Form hinterlegt. Das Computerprogramm 13 umfasst Maschinencode 15, der von der Kransteuerung 12 abarbeitbar ist. Die Abarbeitung des Maschinencodes 15 durch die Kransteuerung 12 bewirkt, dass die Kransteuerung 12 ein Steuerverfahren für das Umschlagsystem ausführt, das nachstehend näher erläutert wird.

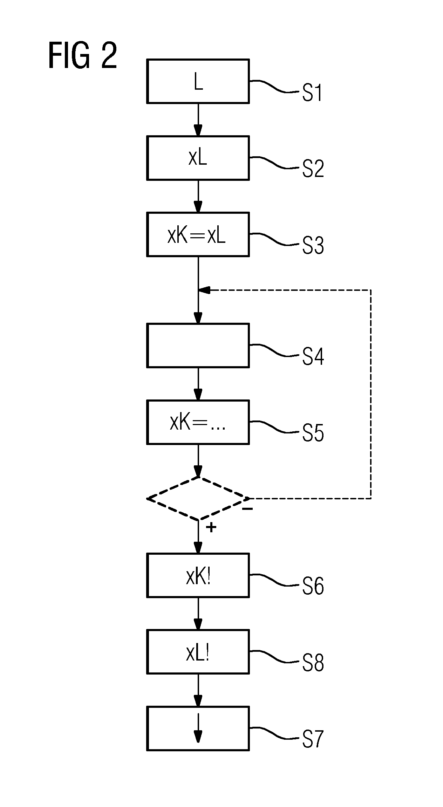

Gemäß FIG 2 wird der Kransteuerung 12 in einem Schritt S1 eine Belastung L bekannt. Die Belastung L ist diejenige Belastung, mit der die Laufkatze 6 belastet ist, wenn der Spreader 8 - mit oder ohne Container 9 - auf eine Lastumschlagstelle 10, 11 abgesenkt wird. Die Belastung L wird nachstehend als Zielbelastung bezeichnet.

Die Implementierung des Schrittes S1 kann auf verschiedene Weisen erfolgen. Beispielsweise kann beim vorherigen Anheben des Spreaders 8 eine Belastung eines Hubwerks ermittelt werden, mittels dessen das Seilsystem 7 betätigt wird. In diesem Fall kann aus der Belastung des Hubwerks die Belastung L ermittelt werden. Alternativ ist es beispielsweise möglich, dass der Kransteuerung 12 die Masse des Spreaders 8 bekannt ist. Wenn der (leere) Spreader 8 abgesenkt werden soll, korrespondiert die Belastung L mit der Masse des Spreaders 8. Wenn der Spreader 8 zusammen mit einem Container 9 abgesenkt werden soll, kann der Kransteuerung 12 beispielsweise von einem Nutzer oder von einem übergeordneten Steuersystem (beide in den FIG nicht dargestellt) vorgegeben wird, welche Masse der entsprechende Container 9 aufweist.

Die Laufkatze 6 befindet sich zu diesem Zeitpunkt, also beim Absenken des Spreaders 8, auf der Traverse 5 an einem Ort xK. Der Ort xK ist ein Zielort für die Laufkatze 6. Er ist auf die Traverse 5 bezogen, genauer auf die Verfahrrichtung der Laufkatze 6 auf der Traverse 5. Das Absenken des Spreaders 8 (mit oder ohne Container 9) soll derart erfolgen, dass beim Absenken des Spreaders 8 am Zielort xK der Laufkatze 6 der Spreader 8 auf einen Ort xL der entsprechenden Lastumschlagstelle 10, 11 abgesenkt wird. Der Ort xL ist ein Zielort der entsprechenden Lastumschlagstelle 10, 11. Der Zielort xL der entsprechenden Lastumschlagstelle 10, 11 ist auf den Untergrund 3 bezogen.

Um ein korrektes Absenken des Spreaders 8 zu gewährleisten, müssen die beiden Zielorte xK, xL aufeinander abgestimmt sein. Eine mögliche Vorgehensweise einer derartigen Abstimmung wird nachstehend in Verbindung mit Schritten S2 bis S8 erläutert.

Gemäß FIG 2 wird der Kransteuerung 12 zunächst im Schritt S2 der Zielort xL der Lastumschlagstelle 10, 11 bekannt. Beispielsweise kann der entsprechende Zielort xL der Kransteuerung 12 von dem Nutzer oder von dem übergeordneten Steuersystem vorgegeben werden. Auch andere Vorgehensweisen sind möglich.

Im Schritt S3 ermittelt die Kransteuerung 12 vorläufig den korrespondierenden Zielort xK der Laufkatze 6. Die Ermittlung des Schrittes S3 ist eine ideale Ermittlung. Sie beruht auf der Annahme, dass die Containerbrücke 1 ein absolut starres System ist. In diesem Fall kann der Zielort xL der Lastumschlagstelle 10, 11 direkt 1:1 als Zielort xK der Laufkatze 6 übernommen werden.

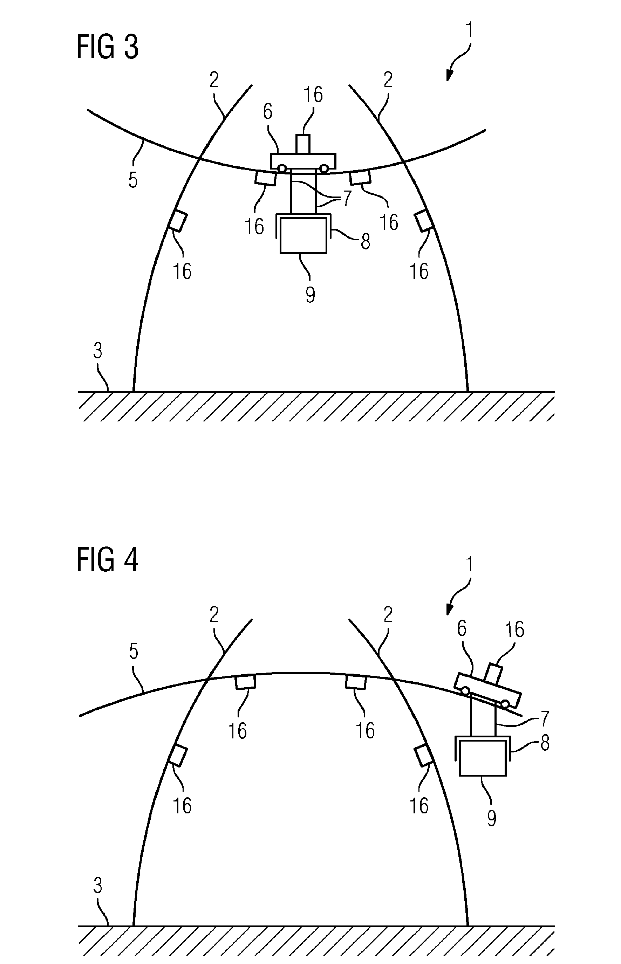

In der Praxis ist die Containerbrücke 1 jedoch ein elastisches System. In Abhängigkeit von der Position der Laufkatze 6 auf der Traverse 5 und der von der Laufkatze 6 getragenen Belastung L (und gegebenenfalls in Abhängigkeit von weiteren Größen) treten daher Verformungen der Containerbrücke 1 auf. Wenn beispielsweise - siehe FIG 3 - die Laufkatze 6 sich mittig zwischen den beiden Stützpfeilern 2 befindet, wird die Traverse 5 in der Mitte nach unten und an ihren Rändern nach oben durchgebogen. Hiermit korrespondierend neigen sich die beiden Stützpfeiler 2 aufeinander zu. Wenn umgekehrt - siehe FIG 4 - die Laufkatze 6 sich an einem Rand ihres Verfahrbereichs auf der Traverse 5 befindet, wird die Traverse 5 in der Mitte nach oben und an ihren Rändern nach unten durchgebogen. Hiermit korrespondierend neigen sich die beiden Stützpfeiler 2 aufeinander zu. Diese (und eventuell auch andere) Verformungen sind, wie bereits erwähnt, sowohl von der Position der Laufkatze 6 auf der Traverse 5 als auch von der von der Laufkatze 6 getragenen Belastung L abhängig. Die Verformungen (die in den FIG 3 und 4 deutlich übertrieben dargestellt sind), bewegen sich in der Praxis im Bereich weniger Zentimeter. Sie sind jedoch im automatisierten Betrieb des Umschlagsystems nicht vernachlässigbar. Die Verformungen werden daher von der Kransteuerung 12 im Schritt S4 ermittelt.

Die Kransteuerung 12 berücksichtigt hierbei den im Schritt S3 ermittelten Zielort xK der Laufkatze 6 und die Zielbelastung L.

Im Schritt S5 korrigiert die Kransteuerung 12 sodann den im Schritt S3 ermittelten Zielort xK unter Berücksichtigung der im Schritt S4 ermittelten Verformungen der Containerbrücke 1. In der Regel wird bereits eine einmalige Korrektur völlig ausreichend sein. Alternativ kann, wie in FIG 2 gestrichelt angedeutet, eine aus den Schritten S4 und S5 bestehende Schleife durchlaufen werden, bis sich eine hinreichende Konvergenz ergibt.

Nach dem Korrigieren des Zielortes xK geht die Kransteuerung 12 zum Schritt S6 über. Im Schritt S6 positioniert die Kransteuerung 12 die Laufkatze 6 an dem im Schritt S5 ermittelten Zielort xK. Danach - das heißt nach dem Positionieren der Laufkatze 6 an ihrem Zielort xK - senkt die Kransteuerung 12 im Schritt S7 die Last 8 (mit oder ohne Container 9) auf die Lastumschlagstelle 10, 11 ab. Falls es sich bei der Lastumschlagstelle 10, 11 um die mobile Lastumschlagstelle 11 handelt, wird weiterhin vor der Ausführung des Schrittes S7 die Lastumschlagstelle 11 an ihrem Zielort xL positioniert. Falls die Lastumschlagstelle 11 von der Kransteuerung 12 gesteuert wird, erfolgt das entsprechende Positionieren gemäß FIG 2 in einem Schritt S8 durch die Kransteuerung 12.

Das Positionieren der Lastumschlagstelle 11 an ihrem Zielort xL muss zwar vor der Ausführung des Schrittes S7 erfolgen. Er muss jedoch nicht unbedingt unmittelbar vor der Ausführung des Schrittes S7 erfolgen. Der Schritt S8 kann daher an beliebiger Stelle innerhalb der Schrittfolge S1 bis S7 ausgeführt werden. Er muss jedoch vor dem Schritt S7 ausgeführt werden.

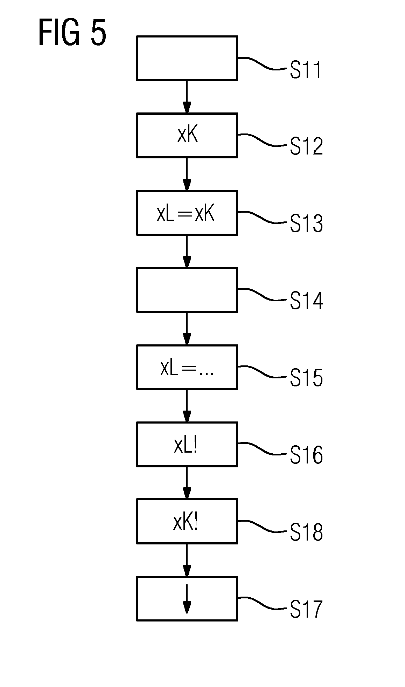

Im Rahmen der obigen Erläuterungen zu FIG 2 wurde angenommen, dass der Kransteuerung 12 im Rahmen der Abstimmung des Zielortes xK der Laufkatze 6 und des Zielortes xL der Lastumschlagstelle 10, 11 aufeinander zunächst der Zielort xL der Lastumschlagstelle 10, 11 bekannt ist. Dementsprechend ermittelt im Rahmen der Ausgestaltung von FIG 2 die Kransteuerung 12 den Zielort xK der Laufkatze 6 unter Berücksichtigung zumindest des Zielortes xL der Lastumschlagstelle 10, 11 und der Zielbelastung L. Wenn es sich bei der Lastumschlagstelle 10, 11 um die mobile Lastumschlagstelle 11 handelt und die mobile Lastumschlagstelle 11 aufgrund einer entsprechenden Ansteuerung durch die Kransteuerung 12 auf dem Untergrund 3 verfahrbar ist, ist jedoch auch die umgekehrte Vorgehensweise möglich. Es ist also möglich, dass der Kransteuerung 12 im Rahmen der Abstimmung des Zielortes xK der Laufkatze 6 und des Zielortes xL der Lastumschlagstelle 11 aufeinander zunächst der Zielort xK der Laufkatze 6 bekannt ist. In diesem Fall ermittelt die Kransteuerung 12 den Zielort xL der mobilen Lastumschlagstelle 11 unter Berücksichtigung zumindest des Zielortes xK der Laufkatze 6 und der Zielbelastung L. Dies wird nachstehend in Verbindung mit FIG 5 näher erläutert.

Gemäß FIG 5 wird der Kransteuerung 12 - analog zum Schritt S1 von FIG 2 - in einem Schritt S11 die Zielbelastung L bekannt. Sodann wird der Kransteuerung 12 in einem Schritt S12 der Zielort xK der Laufkatze 6 bekannt. Beispielsweise kann der entsprechende Zielort xK der Kransteuerung 12 von dem Nutzer oder von dem übergeordneten Steuersystem vorgegeben werden. Auch ist es möglich, dass der Zielort xK von der Kransteuerung 12 beim Positionieren der Laufkatze 6 auf der Traverse 5 bekannt wird.

In einem Schritt S13 ermittelt die Kransteuerung 12 sodann - in analoger Anwendung des Schrittes S3 von FIG 2 - vorläufig den korrespondierenden Zielort xL der mobilen Lastumschlagstelle 11. Es wird also der Zielort xK der Laufkatze 6 direkt 1:1 als Zielort xL der Lastumschlagstelle 10, 11 übernommen.

In einem Schritt S14 ermittelt die Kransteuerung 12 - analog zum Schritt S4 von FIG 2 - die Verformungen der Containerbrücke 1, die auftreten, wenn die Laufkatze 6 an ihrem Zielort xK positioniert ist und mit der Zielbelastung L belastet ist.

Im Schritt S15 korrigiert die Kransteuerung 12 sodann den im Schritt S13 ermittelten Zielort xL unter Berücksichtigung der im Schritt S14 ermittelten Verformungen der Containerbrücke 1. Im Rahmen des Schrittes S15 führt bereits eine einmalige Korrektur zu einer idealen Korrektur.

Nach dem Korrigieren des Zielortes xL geht die Kransteuerung 12 zum Schritt S16 über. Im Schritt S16 positioniert die Kransteuerung 12 die mobile Lastumschlagstelle 11 zu dem im Schritt S15 ermittelten Zielort xL. Danach - das heißt nach dem Positionieren der mobilen Lastumschlagstelle 11 an ihrem Zielort xL - senkt die Kransteuerung 12 im Schritt S17 den Spreader 8 (mit oder ohne Container 9) auf die mobile Lastumschlagstelle 11 ab.

Weiterhin wird vor der Ausführung des Schrittes S17 von der Kransteuerung 12 in einem Schritt S18 die Laufkatze 6 an ihrem Zielort xK positioniert. Das Positionieren der Laufkatze 6 an ihrem Zielort xK muss vor der Ausführung des Schrittes S17 erfolgen. Er muss jedoch nicht unbedingt unmittelbar vor der Ausführung des Schrittes S17 erfolgen. Der Schritt S18 kann daher an beliebiger Stelle innerhalb der Schrittfolge S11 bis S17 ausgeführt werden. Er muss jedoch vor dem Schritt S17 ausgeführt werden.

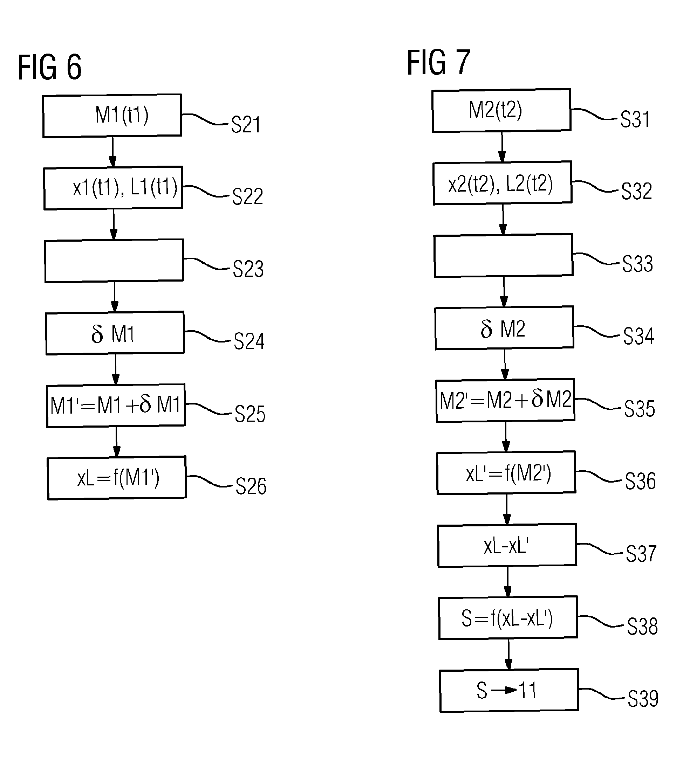

Im Rahmen der Vorgehensweise von FIG 2 - siehe dort den Schritt S2 - wird der Kransteuerung 12 der Zielort xL der Lastumschlagstelle 10, 11 bekannt. Dies kann im Rahmen des Schrittes S2, wie bereits erläutert, auf prinzipiell beliebige Weise erfolgen. Nachfolgend wird in Verbindung mit FIG 6 eine mögliche Ausgestaltung des Schrittes S2 von FIG 2 erläutert, bei welcher die Kransteuerung 12 den Zielort xL der Lastumschlagstelle 10, 11 selbsttätig ermittelt. Die Vorgehensweise von FIG 6 ist insbesondere dann von Vorteil, wenn es sich bei der Lastumschlagstelle 10, 11 um die mobile Lastumschlagstelle 11 handelt. Sie ist jedoch prinzipiell auch dann anwendbar, wenn es sich um eine ortsfeste Lastumschlagstelle 10 handelt.

Im Rahmen der Ausgestaltung von FIG 6 sind - siehe FIG 1 - an der Containerbrücke 1 Sensoren 16 angeordnet. Mittels der Sensoren 16 werden gemäß FIG 6 in einem Schritt S21 Messwerte M1 für den Zielort xL der Lastumschlagstelle 10, 11 erfasst. Die Erfassung erfolgt zu einem Erfassungszeitpunkt t1, nachfolgend als erster Erfassungszeitpunkt t1 bezeichnet. Die Sensoren 16 können beispielsweise als Kameras, Abstandsmesser auf Laser- oder Ultraschallbasis und dergleichen mehr ausgebildet sein.

Der Kransteuerung 12 wird gemäß FIG 6 weiterhin in einem Schritt S22 eine momentaner Ort x1 der Laufkatze 6 bekannt, nachfolgend als erster Erfassungsort x1 bezeichnet. Der erste Erfassungsort x1 der Laufkatze 6 ist auf die Traverse 5 bezogen. Er kann beispielsweise mittels eines entsprechenden Wegmesssystems für die Laufkatze 6 erfasst werden. Der Kransteuerung 12 wird gemäß FIG 6 im Schritt S22 auch eine momentane Belastung L1 der Laufkatze 6 bekannt, nachfolgend als erste Erfassungsbelastung L1 bezeichnet. Die erste Erfassungsbelastung L1 kann der Kransteuerung 12 analog zur Zielbelastung L von Schritt S1 von FIG 2 bekannt werden. Sowohl der erste Erfassungsort x1 als auch die erste Erfassungsbelastung L1 sind auf den ersten Erfassungszeitpunkt t1 bezogen. Der erste Erfassungsort x1 ist also derjenige Ort, an dem die Laufkatze 6 sich zum ersten Erfassungszeitpunkt t1 auf der Traverse 5 befindet. In analoger Weise ist die erste Erfassungsbelastung L1 diejenige Belastung, mit der die Laufkatze 6 zum ersten Erfassungszeitpunkt t1 belastet ist.

In einem Schritt S23 ermittelt die Kransteuerung 12 - analog zum Schritt S4 von FIG 2 - die Verformungen der Containerbrücke 1, die auftreten, wenn die Laufkatze 6 am ersten Erfassungsort x1 positioniert ist und mit der ersten Erfassungsbelastung L1 belastet ist. Unter Berücksichtigung der Verformungen der Containerbrücke 1 ermittelt die Kransteuerung 12 sodann in einem Schritt S24 Korrekturgrößen δM1 für die Messwerte M1. In einem Schritt S25 ermittelt die Kransteuerung 12 unter Verwertung der im Schritt S24 ermittelten Korrekturgrößen δM1 korrigierte Messwerte M1'. Schließlich ermittelt die Kransteuerung 12 in einem Schritt S26 anhand der korrigierten Messwerte M1' den Zielort xL der Lastumschlagstelle 10, 11.

Im Rahmen der Vorgehensweise von FIG 5 - siehe dort den Schritt S16 - und möglicherweise auch im Rahmen der Vorgehensweise von FIG 2 - siehe dort den Schritt S8 - wird die mobile Lastumschlagstelle 11 von der Kransteuerung 12 positioniert. Nachfolgend wird in Verbindung mit FIG 7 eine mögliche Ausgestaltung des Schrittes S8 von FIG 2 und des Schrittes S16 von FIG 5 erläutert.

Im Rahmen der Ausgestaltung von FIG 7 sind - analog zur Ausgestaltung in Verbindung mit FIG 6 - an der Containerbrücke 1 die Sensoren 16 angeordnet. Mittels der Sensoren 16 werden gemäß FIG 7 in einem Schritt S31 Messwerte M2 für einen Istort xL' der mobilen Lastumschlagstelle 11 erfasst. Die Erfassung erfolgt zu einem Erfassungszeitpunkt t2, nachfolgend als zweiter Erfassungszeitpunkt t2 bezeichnet.

Der Kransteuerung 12 wird gemäß FIG 7 weiterhin in einem Schritt S32 eine momentaner Ort x2 der Laufkatze 6 bekannt, nachfolgend als zweiter Erfassungsort x2 bezeichnet. Der zweite Erfassungsort x2 der Laufkatze 6 ist auf die Traverse 5 bezogen. Er kann beispielsweise mittels eines entsprechenden Wegmesssystems für die Laufkatze 6 erfasst werden. Der Kransteuerung 12 wird gemäß FIG 7 im Schritt S32 auch eine momentane Belastung L2 der Laufkatze 6 bekannt, nachfolgend als zweite Erfassungsbelastung L2 bezeichnet. Die zweite Erfassungsbelastung L2 kann der Kransteuerung 12 analog zur Zielbelastung L von Schritt S1 von FIG 2 bekannt werden. Sowohl der zweite Erfassungsort x2 als auch die zweite Erfassungsbelastung L2 sind auf den zweiten Erfassungszeitpunkt t2 bezogen. Der zweite Erfassungsort x2 ist also derjenige Ort, an dem die Laufkatze 6 sich zum zweiten Erfassungszeitpunkt t2 auf der Traverse 5 befindet. In analoger Weise ist die zweite Erfassungsbelastung L2 diejenige Belastung, mit der die Laufkatze 6 zum zweiten Erfassungszeitpunkt t2 belastet ist.

In einem Schritt S33 ermittelt die Kransteuerung 12 - analog zum Schritt S4 von FIG 2 - die Verformungen der Containerbrücke 1, die auftreten, wenn die Laufkatze 6 am zweiten Erfassungsort x2 positioniert ist und mit der zweiten Erfassungsbelastung L2 belastet ist. Unter Berücksichtigung der Verformungen der Containerbrücke 2 ermittelt die Kransteuerung 12 sodann in einem Schritt S34 - analog zum Schritt S24 von FIG 6 - Korrekturgrößen δM2 für die Messwerte M2. In einem Schritt S35 ermittelt die Kransteuerung 12 - analog zum Schritt S25 von FIG 6 - unter Verwertung der im Schritt S34 ermittelten Korrekturgrößen δM2 korrigierte Messwerte M2'. Schließlich ermittelt die Kransteuerung 12 in einem Schritt S36 anhand der korrigierten Messwerte M2' - analog zum Schritt S26 von FIG 6 - den Istort xL' der mobilen Lastumschlagstelle 11.

In einem Schritt S37 ermittelt die Kransteuerung 12 die Abweichung des ermittelten Istortes xL' der mobilen Lastumschlagstelle 11 vom Zielort xL der mobilen Lastumschlagstelle 11. In einem Schritt S38 ermittelt die Kransteuerung 12 in Abhängigkeit von der im Schritt S37 ermittelten Abweichung Steuerbefehle S für das Positionieren der mobilen Lastumschlagstelle 11. Weiterhin erfolgt in einem Schritt S39 eine entsprechende Ansteuerung der mobilen Lastumschlagstelle 11.

Oftmals sind die Schritte S31 bis S39 in eine wiederholt ausgeführte Regelschleife eingebunden. Dies ist in FIG 7 lediglich der besseren Übersichtlichkeit wegen nicht mit dargestellt.

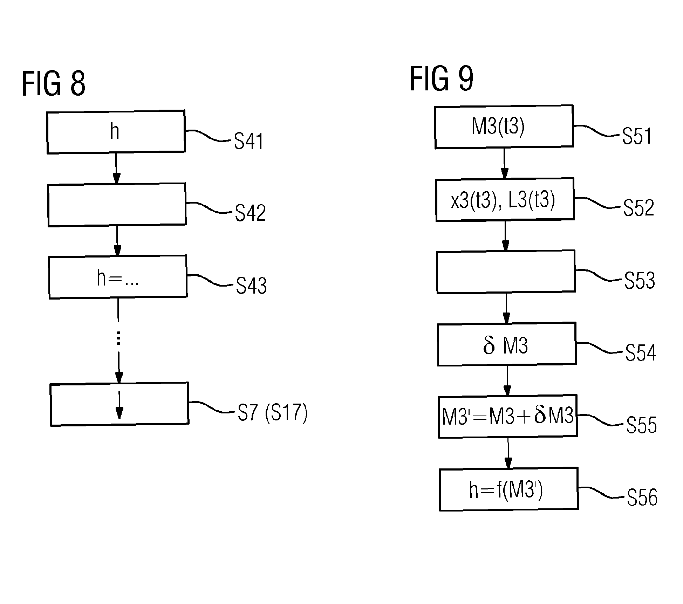

Soweit bisher erläutert, ist die Korrektur der Zielorte xK, xL und des Istortes xL' auf die Verfahrrichtung der Laufkatze 6 beschränkt. Die obenstehend erläuterten Vorgehensweisen sind jedoch ohne weiteres auch auf die hierzu orthogonale horizontale Richtung erweiterbar. Die entsprechenden Vorgehensweisen sind völlig analog zu den obenstehend erläuterten Vorgehensweisen. Es ist auch möglich, analoge Vorgehensweisen anzuwenden, wenn es um das Absenken der Last 8 geht. Dies wird nachstehend in Verbindung mit FIG 8 näher erläutert.

FIG 8 zeigt eine mögliche Ergänzung des Schrittes S7 von FIG 2 bzw. des Schrittes S17 von FIG 5. Diese Ergänzung ist dem Schritt S7 von FIG 2 bzw. dem Schritt S17 von FIG 5 vorgeschaltet.

Gemäß FIG 8 wird der Kransteuerung 12 in einem Schritt S41 eine Zielhöhe h der Ziellast 8 bekannt. Die Zielhöhe h kann alternativ auf den Untergrund 3 oder auf die Laufkatze 6 bezogen sein. Sie kann der Kransteuerung 12 beispielsweise aufgrund einer Vorgabe durch den Nutzer, aufgrund einer Vorgabe durch eine übergeordnete Steuereinrichtung oder aufgrund eigener Messungen bekannt sein.

In einem Schritt S42 ermittelt die Kransteuerung 12, basierend auf den Verformungen der Containerbrücke 1, einen Korrekturwert für die Zielhöhe h. Der Schritt S42 kann Bestandteil des Schrittes S4 von FIG 2 bzw. des Schrittes S14 von FIG 5 sein. In einem Schritt S43 korrigiert die Kransteuerung 12 die Zielhöhe h um den im Schritt S42 ermittelten Korrekturwert.

Nach dem Korrigieren der Zielhöhe h wird der Schritt S7 von FIG 2 bzw. der Schritt S17 von FIG 5 ausgeführt. Hierbei wird die Ziellast 8 auf die von der Kransteuerung 12 korrigierte Zielhöhe h abgesenkt.

Im Rahmen der Vorgehensweise von FIG 8 - siehe dort den Schritt S41 - wird der Kransteuerung 12 die Zielhöhe h bekannt. Nachfolgend wird in Verbindung mit FIG 9 eine mögliche Ausgestaltung des Schrittes S41 von FIG 8 erläutert, bei welcher die Kransteuerung 12 die Zielhöhe h selbsttätig ermittelt. Die Vorgehensweise von FIG 9 ist insbesondere dann von Vorteil, wenn es sich bei der Lastumschlagstelle 10, 11 um die mobile Lastumschlagstelle 11 handelt. Sie ist jedoch prinzipiell auch dann anwendbar, wenn es sich um eine ortsfeste Lastumschlagstelle 10 handelt.

Im Rahmen der Ausgestaltung von FIG 9 sind - analog zur Ausgestaltung in Verbindung mit FIG 6 - an der Containerbrücke 1 die Sensoren 16 angeordnet. Mittels der Sensoren 16 werden gemäß FIG 9 in einem Schritt S51 Messwerte M3 für die Zielhöhe h erfasst. Die Erfassung erfolgt zu einem Erfassungszeitpunkt t3, nachfolgend als dritter Erfassungszeitpunkt t3 bezeichnet. Die Sensoren 16 können die gleichen Sensoren sein die bereits in Verbindung mit den FIG 6 und 7 erläutert wurden.

Der Kransteuerung 12 wird gemäß FIG 9 weiterhin in einem Schritt S52 eine momentaner Ort x3 der Laufkatze 6 bekannt, nachfolgend als dritter Erfassungsort x3 bezeichnet. Der dritte Erfassungsort x3 der Laufkatze 6 ist auf die Traverse 5 bezogen. Er kann beispielsweise mittels eines entsprechenden Wegmesssystems für die Laufkatze 6 erfasst werden. Der Kransteuerung 12 wird gemäß FIG 9 im Schritt S52 auch eine momentane Belastung L3 der Laufkatze 6 bekannt, nachfolgend als dritte Erfassungsbelastung L3 bezeichnet. Die dritte Erfassungsbelastung L3 kann der Kransteuerung 12 analog zur Zielbelastung L von Schritt S1 von FIG 2 bekannt werden. Sowohl der dritte Erfassungsort x1 als auch die dritte Erfassungsbelastung L3 sind auf den dritten Erfassungszeitpunkt t3 bezogen. Der dritte Erfassungsort x3 ist also derjenige Ort, an dem die Laufkatze 6 sich zum dritten Erfassungszeitpunkt t3 auf der Traverse 5 befindet. In analoger Weise ist die dritte Erfassungsbelastung L3 diejenige Belastung, mit der die Laufkatze 6 zum dritten Erfassungszeitpunkt t3 belastet ist.

In einem Schritt S53 ermittelt die Kransteuerung 12 - analog zum Schritt S4 von FIG 2 - die Verformungen der Containerbrücke 1, die auftreten, wenn die Laufkatze 6 am dritten Erfassungsort x3 positioniert ist und mit der dritten Erfassungsbelastung L3 belastet ist. Unter Berücksichtigung der Verformungen der Containerbrücke 1 ermittelt die Kransteuerung 12 sodann in einem Schritt S54 - analog zum Schritt Schritt S24 von FIG 6 - Korrekturgrößen δM3 für die Messwerte M3. In einem Schritt S55 ermittelt die Kransteuerung 12 - analog zum Schritt S25 von FIG 6 - unter Verwertung der im Schritt S54 ermittelten Korrekturgrößen δM3 korrigierte Messwerte M3'. Schließlich ermittelt die Kransteuerung 12 in einem Schritt S56 anhand der korrigierten Messwerte M3' - analog zum Schritt S26 von FIG 6 - die korrigierte Zielhöhe h.

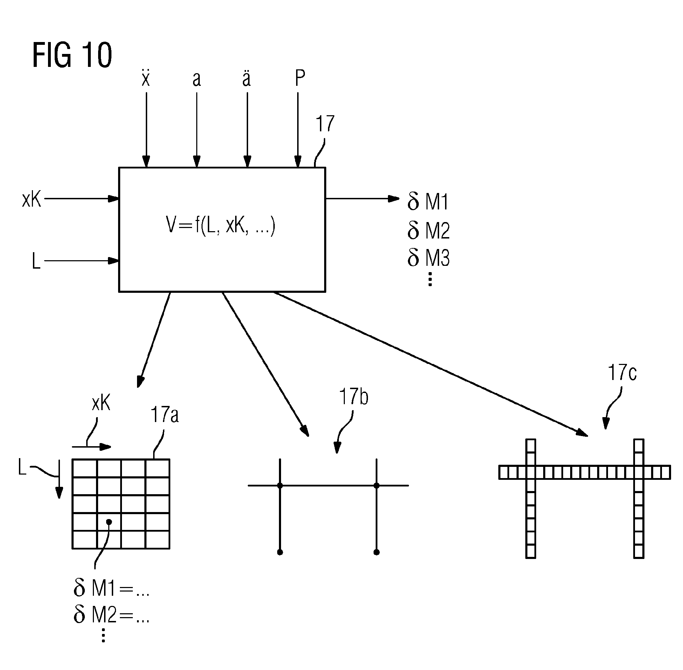

Zur Ermittlung der vom Ort der Laufkatze 6 und der Belastung der Laufkatze 6 abhängigen Verformungen der Containerbrücke 1 implementiert die Kransteuerung 12 gemäß FIG 10 ein Modell 17. Die Implementierung kann insbesondere durch die Ausführung des Computerprogramms 13 erfolgen. Dem Modell 17 werden gemäß FIG 10 als Eingangsgrößen zumindest der jeweilige Ort der Laufkatze 6 und die jeweilige Belastung der Laufkatze 6 zugeführt. Dargestellt ist dies in FIG 10 für den Zielort xK der Laufkatze 6 und die Zielbelastung L. Dem Modell 17 können alternativ jedoch ebenso ein anderer Ort und die zugehörige Belastung zugeführt werden, beispielsweise der erste Erfassungsort x1 und die erste Erfassungsbelastung L1 oder der zweite Erfassungsort x2 und die zweite Erfassungsbelastung L2 oder der dritte Erfassungsort x3 und die dritte Erfassungsbelastung L3.

Anhand der ihm zugeführten Eingangsgrößen ermittelt das Modell 17 einen Verformungszustand V. Anhand des Verformungszustands V können sodann verschiedenste Korrekturgrößen ermittelt werden, beispielsweise Änderungen der Positionierung und/oder Orientierung der Sensoren 16 und eine Positionsänderung der Laufkatze 6 horizontal und vertikal. Änderungen der Positionierung und/Orientierung der Sensoren 16 können beispielsweise zur Ermittlung der entsprechenden Korrekturgrößen δM1, δM2, δM3 verwendet werden, wenn dem Modell 17 als Eingangsgrößen der erste Erfassungsort x1 und die erste Erfassungsbelastung L1 bzw. der zweite Erfassungsort x2 und die zweite Erfassungsbelastung L2 bzw. der dritte Erfassungsort x3 und die dritte Erfassungsbelastung L3 zugeführt werden. Eine Positionsänderung der Laufkatze 6 horizontal kann zur Korrektur des Zielortes xL der Lastumschlagstelle 10, 11 bzw. zur Korrektur des Zielortes xK der Laufkatze 6 verwendet werden, wenn dem Modell 17 als Eingangsgrößen der Zielort xK des Schrittes S3 von FIG 2 bzw. des Schrittes S12 von FIG 5 und die Zielbelastung L zugeführt werden. Unabhängig davon, ob eine oder mehrere dieser Vorgehensweisen ergriffen werden, verwendet die Kransteuerung 12 das Modell 17 im Rahmen der Abstimmung des Zielortes xK der Laufkatze 6 und des Zielortes xL der Lastumschlagstelle 10, 11 aufeinander.

Das Modell 17 als solches kann beispielsweise eine Korrekturtabelle 17a umfassen. Die Korrekturtabelle 17a ist in diesem Fall mehrdimensional aufgebaut, nämlich pro Eingangsgröße eine Dimension. Die Korrekturtabelle 17a ist zwar nur für gewisse Stützstellen definiert. Zwischen Stützstellen kann jedoch in an sich bekannter Weise linear oder nichtlinear interpoliert werden. Alternativ kann das Modell 17 als Stabtragwerkmodell 17b der Containerbrücke 1 ausgebildet sein. Wiederum alternativ kann das Modell 17 als auf finiten Elementen basierendes Modell 17c der Containerbrücke 1 ausgebildet sein. Auch weitergehende Ausgestaltungen und Kombinationen der Modelle 17a, 17b, 17c sind möglich.

Soweit bisher erläutert, erfolgt weiterhin die Korrektur ausschließlich anhand eines jeweiligen Ortes xK, x1, x2, x3 der Laufkatze 6 und der jeweils zugehörigen Belastung L, L1, L2, 13 der Laufkatze 6. Soweit es die Ermittlung von Korrekturgrößen δM1, δM2, δM3 für die von den Sensoren 16 erfassten Messwerte M1, M2, M3 betrifft, ist es jedoch möglich, dass die Kransteuerung 12 - stets bezogen auf den jeweiligen Erfassungszeitpunkt t1, t2, t3 - weitere Größen berücksichtigt.

Bei diesen Größen kann es sich entsprechend der Darstellung in FIG 10 beispielsweise um folgende Größen handeln:
- Mindestens eine zeitliche Ableitung des jeweiligen Erfassungsortes x1, x2, x3 insbesondere die zweite zeitliche Ableitung (= Beschleunigung) des jeweiligen Erfassungsortes x1, x2, x3.
- Einen Abstand a der jeweiligen Last 8 von der Laufkatze 6, im Ergebnis also eine wirksame Seillänge.
- Mindestens eine zeitliche Ableitung des jeweiligen Abstands a der jeweiligen Erfassungslast 8, insbesondere die zweite zeitliche Ableitung des Abstands a. Diese Größe entspricht im wesentlichen demjenigen Wert, mit dem eine Hub- bzw. Absenkgeschwindigkeit der Last 8 geändert wird.
- Einen Pendelzustand P der Last 8 relativ zur Laufkatze 6. Der Pendelzustand P kann insbesondere die wirksame Seillänge, die Richtung und die Amplitude der Pendelbewegung sowie die Phasenlage der Pendelbewegung umfassen.

Zusammengefasst betrifft die vorliegende Erfindung somit folgenden Sachverhalt:
Ein Umschlagsystem umfasst eine auf einem Untergrund 3 angeordnete Containerbrücke 1 und mindestens eine auf dem Untergrund 3 angeordnete Lastumschlagstelle 10, 11. Die Containerbrücke 1 weist eine auf einer Traverse 5 der Containerbrücke 1 relativ zum Untergrund 3 verfahrbare Laufkatze 6 auf. Eine Kransteuerung 12 stimmt einen auf die Traverse 5 bezogenen Zielort xK der Laufkatze 6 und einen auf den Untergrund 3 bezogenen Zielort xL der Lastumschlagstelle 10, 11 derart aufeinander ab, dass beim Absenken der Ziellast 8 am Zielort xK der Laufkatze 6 die Ziellast 8 auf den Zielort xL der Lastumschlagstelle 10, 11 abgesenkt wird. Die Abstimmung erfolgt unter zusätzlicher Berücksichtigung zumindest einer Zielbelastung L, mit der die Laufkatze 6 an ihrem Zielort xK belastet ist. Die Kransteuerung 12 positioniert die Laufkatze 6 an ihrem Zielort xL. Weiterhin senkt sie nach dem Positionieren der Laufkatze 6 die Ziellast 8 auf die Lastumschlagstelle 10, 11 ab. Falls die Lastumschlagstelle 11 auf dem Untergrund 3 verfahrbar ist und die Lastumschlagstelle 11 von der Kransteuerung 12 gesteuert wird, positioniert die Kransteuerung 12 weiterhin vor dem Absenken der Ziellast 8 auf die Lastumschlagstelle 11 die Lastumschlagstelle 11 an ihrem Zielort xL.

Die vorliegende Erfindung weist viele Vorteile auf. Insbesondere ist auf einfache und zuverlässige Weise eine hochgenaue Positionierung der Laufkatze 6 relativ zur Lastumschlagstelle 10, 11 möglich. Weiterhin ist es ohne weiteres möglich, eine bestehende Kransteuerung des Standes der Technik entsprechend nachzurüsten.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Steuerverfahren für ein Umschlagsystem, das eine auf einem Untergrund (3) angeordnete Containerbrücke (1) mit einer auf einer Traverse (5) der Containerbrücke (1) relativ zum Untergrund (3) verfahrbaren Laufkatze (6) und mindestens eine auf dem Untergrund (3) angeordnete Lastumschlagstelle (10, 11) umfasst,
- wobei eine Kransteuerung (12) unter Berücksichtigung zumindest einer Zielbelastung (L), mit der die Laufkatze (6) an ihrem Zielort (xK) belastet ist, einen auf die Traverse (5) bezogenen Zielort (xK) der Laufkatze (6) und einen auf den Untergrund (3) bezogenen Zielort (xL) der Lastumschlagstelle (10, 11) derart aufeinander abstimmt, dass beim Absenken der Ziellast (8) am Zielort (xK) der Laufkatze (6) die Ziellast (8) auf den Zielort (xL) der Lastumschlagstelle (10, 11) abgesenkt wird,
- wobei die Kransteuerung (12) die Laufkatze (6) an ihrem Zielort (xL) positioniert,
- wobei die Kransteuerung (12) nach dem Positionieren der Laufkatze (6) die Ziellast (8) auf die Lastumschlagstelle (10, 11) absenkt und
- wobei, falls die Lastumschlagstelle (11) auf dem Untergrund (3) verfahrbar ist und die Lastumschlagstelle (11) von der Kransteuerung (12) gesteuert wird, die Kransteuerung (12) vor dem Absenken der Ziellast (8) auf die Lastumschlagstelle (11) die Lastumschlagstelle (11) an ihrem Zielort (xL) positioniert.

2. Steuerverfahren nach Anspruch 1,
**dadurch gekennzeichnet,**
- dass der Kransteuerung (12) im Rahmen der Abstimmung des Zielortes (xK) der Laufkatze (6) und des Zielortes (xL) der Lastumschlagstelle (10, 11) aufeinander zunächst der Zielort (xL) der Lastumschlagstelle (10, 11) bekannt ist und
- dass die Kransteuerung (12) den Zielort (xK) der Laufkatze (6) unter Berücksichtigung zumindest des Zielortes (xL) der Lastumschlagstelle (10, 11) und der Zielbelastung (L) ermittelt.

3. Steuerverfahren nach Anspruch 1,
**dadurch gekennzeichnet,**
- dass zu einem ersten Erfassungszeitpunkt (t1) mittels an der Containerbrücke (1) angeordneter Sensoren (16) Messwerte (M1) für den Zielort (xL) der Lastumschlagstelle (10, 11) erfasst werden,
- dass die Kransteuerung (12) den Zielort (xL) der Lastumschlagstelle (10, 11) anhand der Messwerte (M1) für den Zielort (xL) der Lastumschlagstelle (10, 11) unter Berücksichtigung zumindest eines ersten Erfassungsortes (x1) und einer ersten Erfassungsbelastung (L1) ermittelt,
- dass der erste Erfassungsort (x1) derjenige Ort ist, an dem die Laufkatze (6) sich zum ersten Erfassungszeitpunkt (t1) auf der Traverse (5) befindet, und
- dass die erste Erfassungsbelastung (L1) diejenige Belastung ist, mit der die Laufkatze (6) zum ersten Erfassungszeitpunkt (t1) belastet ist.

4. Steuerverfahren nach Anspruch 3,
**dadurch gekennzeichnet,**
**dass** die Kransteuerung (12) im Rahmen der Ermittlung des Zielorts (xL) der Lastumschlagstelle (10, 11) - stets bezogen auf den ersten Erfassungszeitpunkt (t1) - mindestens eine zeitliche Ableitung des ersten Erfassungsortes (x1), einen Abstand (a) der ersten Erfassungslast (8) von der Laufkatze (6), mindestens eine zeitliche Ableitung des Abstands (a) der ersten Erfassungslast (8) von der Laufkatze (6) und/oder einen Pendelzustand (P) der ersten Erfassungslast (8) relativ zur Laufkatze (6) berücksichtigt.

5. Steuerverfahren nach Anspruch 1,
**dadurch gekennzeichnet,**
- dass die Lastumschlagstelle (11) aufgrund einer entsprechenden Ansteuerung durch die Kransteuerung (12) auf dem Untergrund (3) verfahrbar ist,
- dass der Kransteuerung (12) im Rahmen der Abstimmung des Zielortes (xK) der Laufkatze (6) und des Zielortes (xL) der Lastumschlagstelle (11) aufeinander zunächst der Zielort (xK) der Laufkatze (6) bekannt ist und
- dass die Kransteuerung (12) den Zielort (xL) der Lastumschlagstelle (11) unter Berücksichtigung zumindest des Zielortes (xK) der Laufkatze (6) und der Zielbelastung (L) ermittelt.

6. Steuerverfahren nach einem der obigen Ansprüche, **dadurch gekennzeichnet,**
- dass die Lastumschlagstelle (11) aufgrund einer entsprechenden Ansteuerung durch die Kransteuerung (12) auf dem Untergrund (3) verfahrbar ist,
- dass zu einem zweiten Erfassungszeitpunkt (t2) mittels an der Containerbrücke (1) angeordneter Sensoren (16) Messwerte (M2) für einen Istort (xL') der Lastumschlagstelle (11) erfasst werden,
- dass die Kransteuerung (12) den Istort (xL') der Lastumschlagstelle (11) anhand der Messwerte (M2) für den Istort (xL') der Lastumschlagstelle (11) unter Berücksichtigung zumindest eines zweiten Erfassungsortes (x2) und einer zweiten Erfassungsbelastung (L2) ermittelt,
- dass der zweite Erfassungsort (x2) derjenige Ort ist, an dem die Laufkatze (6) sich zum zweiten Erfassungszeitpunkt (t2) auf der Traverse (5) befindet,
- dass die zweite Erfassungsbelastung (L2) diejenige Belastung ist, mit der die Laufkatze (6) zum zweiten Erfassungszeitpunkt (t2) belastet ist, und
- dass die Kransteuerung (12) in Abhängigkeit von der Abweichung des ermittelten Istortes (xL') der Lastumschlagstelle (11) vom Zielort (xL) der Lastumschlagstelle (11) Steuerbefehle (S) für das Positionieren der Lastumschlagstelle (11) ermittelt.

7. Steuerverfahren nach Anspruch 6,
**dadurch gekennzeichnet,**
**dass** die Kransteuerung (12) im Rahmen der Ermittlung des Istortes (xL') der Lastumschlagstelle (11) - stets bezogen auf den zweiten Erfassungszeitpunkt (t2) - mindestens eine zeitliche Ableitung des zweiten Erfassungsortes (x2), einen Abstand (a) der zweiten Erfassungslast (8) von der Laufkatze (6), mindestens eine zeitliche Ableitung des Abstands (a) der zweiten Erfassungslast (8) von der Laufkatze (6) und/oder einen Pendelzustand (P) der zweiten Erfassungslast (8) relativ zur Laufkatze (6) berücksichtigt.

8. Steuerverfahren nach einem der obigen Ansprüche, **dadurch gekennzeichnet,**
- dass die Kransteuerung (12) eine Zielhöhe (h) der Ziellast (8) unter Berücksichtigung zumindest des Zielortes (xK) der Laufkatze (6) und der Ziellast (L) korrigiert und
- dass die Kransteuerung (12) die Ziellast (8) auf die von ihr korrigierte Zielhöhe (h) absenkt.

9. Steuerverfahren nach Anspruch 8,
**dadurch gekennzeichnet,**
- dass zu einem dritten Erfassungszeitpunkt (t3) mittels an der Containerbrücke (1) angeordneter Sensoren (16) Messwerte (M3) für die Zielhöhe (h) erfasst werden,
- dass die Kransteuerung (12) die Zielhöhe (h) anhand der Messwerte (M3) für die Zielhöhe (h) unter Berücksichtigung zumindest eines dritten Erfassungsortes (x3) und einer dritten Erfassungsbelastung (L3) ermittelt,
- dass der dritte Erfassungsort (x3) derjenige Ort ist, an dem die Laufkatze (6) sich zum dritten Erfassungszeitpunkt (t3) auf der Traverse (5) befindet, und
- dass die dritte Erfassungsbelastung (L3) diejenige Belastung ist, mit der die Laufkatze (6) zum dritten Erfassungszeitpunkt (t3) belastet ist.

10. Steuerverfahren nach Anspruch 9,
**dadurch gekennzeichnet,**
**dass** die Kransteuerung (12) im Rahmen der Ermittlung der Zielhöhe (h) - stets bezogen auf den dritten Erfassungszeitpunkt (t3) - mindestens eine zeitliche Ableitung des dritten Erfassungsortes (x3), einen Abstand (a) der dritten Erfassungslast (8) von der Laufkatze (6), mindestens eine zeitliche Ableitung des Abstands (a) der dritten Erfassungslast (8) von der Laufkatze (6) und/oder einen Pendelzustand (P) der dritten Erfassungslast (8) relativ zur Laufkatze (6) berücksichtigt.

11. Steuerverfahren nach einem der obigen Ansprüche,
**dadurch gekennzeichnet,**
**dass** die Kransteuerung (12) im Rahmen der Abstimmung des Zielortes (xK) der Laufkatze (6) und des Zielortes (xL) der Lastumschlagstelle (10, 11) aufeinander ein in der Kransteuerung (12) hinterlegtes, zumindest von der jeweiligen Belastung (L, L1, L2, L3) der Laufkatze (6) und dem jeweiligen Ort (xK, x1, x2, x3) der Laufkatze (6) auf der Traverse (5) abhängiges Modell (17) der Containerbrücke (1) implementiert, wobei das Modell (17) eine Korrekturtabelle (17a), ein Stabtragwerkmodell (17b) der Containerbrücke (1) und/oder ein auf finiten Elementen basierendes Modell (17c) der Containerbrücke (1) umfasst.

12. Computerprogramm, das Maschinencode (15) umfasst, der von einer Kransteuerung (12) abarbeitbar ist, wobei die Abarbeitung des Maschinencodes (15) durch die Kransteuerung (12) bewirkt, dass die Kransteuerung (12) ein Steuerverfahren nach einem der obigen Ansprüche ausführt.

13. Computerprogramm nach Anspruch 12,
**dadurch gekennzeichnet,**
**dass** es in einem Speicher (14) in maschinenlesbarer Form hinterlegt ist.

14. Kransteuerung,
**dadurch gekennzeichnet,**
**dass** sie mit einem Computerprogramm (13) nach Anspruch 12 programmiert ist.

15. Umschlagsystem,
- wobei das Umschlagsystem eine auf einem Untergrund (3) angeordnete Containerbrücke (1) mit einer Traverse (5) umfasst,
- wobei die Containerbrücke (1) eine auf der Traverse (5) relativ zum Untergrund (3) verfahrbare Laufkatze (6) aufweist,
- wobei das Umschlagsystem mindestens eine auf dem Untergrund (3) angeordnete Lastumschlagstelle (10, 11) umfasst,
- wobei das Umschlagsystem eine Kransteuerung (12) umfasst,
**dadurch gekennzeichnet,**
**dass** die Kransteuerung (12) gemäß Anspruch 14 ausgebildet ist.
